# EUROPÄISCHE PATENTANMELDUNG

(11) **EP 4 297 458 A1**
(43) Veröffentlichungstag der Anmeldung: **27.12.2023**
(21) Anmeldenummer: 22020293.1
(22) Anmeldetag: 22.06.2022
(51) Int. Cl.: H04W 12/42, H04W 12/088, H04W 12/30, H04L 9/40

(54) **PROFIL UND TEILNEHMERIDENTITÄTSMODUL MIT PROFIL**

(71) Anmelder: Giesecke+Devrient ePayments GmbH, 81677 München (DE)
(72) Erfinder: Dietze, Claus, 82395 Obersöchering (DE)
(74) Vertreter: Giesecke + Devrient IP

(57) **Zusammenfassung**

Die Erfindung schafft ein Profil zur Implementierung in ein oder implementiert in ein Teilnehmeridentitätsmodul (eUICC), wobei das Profil mindestens einen ersten und einen zweiten Profil-Status einnehmen kann, das Profil umfassend Profil-Metadaten, **dadurch gekennzeichnet dass** die Profil-Metadaten ein Profil-Status-Verwaltungs-Flag umfassen, das einen ersten und einen zweiten Flag-Status des Profil-Status-Verwaltungs-Flag einnehmen kann, wobei, wenn das Flag den ersten Flag-Status einnimmt, es beliebigen Verwaltungsservern erlaubt ist, den Profil-Status des Profils zu ändern.

## Beschreibung

### Gebiet der Erfindung

Die Erfindung betrifft ein Profil zur Authentisierung eines Mobilfunkteilnehmers gegenüber einem Mobilfunknetzwerk, und ein Teilnehmeridentitätsmodul umfassend ein darin implementiertes Profil.

Die Welt ist mobil vernetzt, und die mobile Vernetzung schreitet weiter. Mobilfunkfähige Endgeräte kommunizieren über Mobilfunknetze. Zu den mobilfunkfähigen Endgeräten aus dem Consumer-Bereich zählen die Smartphones und Mobiltelefone. Zu mobilfunkfähigen Endgeräten zählen weiter Geräte aus dem IoT-Bereich (loT = Internet-of-Things), wie Regelungsgeräte (Steuerungsgeräte oder Messgeräte oder kombinierte Steuer/Messgeräte) für industrielle Einrichtungen im kommerziellen oder privaten Umfeld. Industrielle Einrichtungen sind beispielsweise Produktionsanlagen, die ein oder mehrere Regelungsgeräte (Endgeräte) haben, die über ein Mobilfunknetz mit einem Hintergrundsystem oder/und miteinander kommunizieren können. Weitere industrielle Einrichtungen sind Smart Home Einrichtung wie Heizungen und Stromverbraucher mit Endgeräten in Gestalt von Regelungsgeräten.

Zur Nutzung eines mobilfunkfähigen Endgeräts in einem Mobilfunknetzwerk eines Netzbetreibers enthält das Endgerät ein Teilnehmeridentitätsmodul mit einem Subskriptions Profil oder kurz Profil. Das Profil bewerkstelligt die Konfiguration des Endgeräts und der Verbindung des Endgeräts im Mobilfunknetz. Das Profil ist durch einen Datensatz gebildet, der den Aufbau, Betrieb und Abbau einer Verbindung des Endgeräts im Mobilfunknetzwerk ermöglicht, und umfasst beispielsweise einen kryptographischen Authentisierungs-Schlüssel Ki und eine International Mobile Subscriber Identity IMSI.

Das Teilnehmeridentitätsmodul kann in unterschiedlichen Formfaktoren gestaltet sein, insbesondere Plug-In, Embedded, Integrated und Software. Teilnehmeridentitätsmodule vom Formfaktor Plug-In und Embedded sind auf einem dezidierten, eigenen Chip oder SoC (System-on-Chip) angeordnet. Beispiele für Plug-Ins sind SIM-Karte (SIM = Subscriber Identity Module) oder USIM-Karte (Universal SIM) oder UICC (Universal Integrated Circuit Card) und kontaktieren das Endgerät über einen Kartenleser. Alternativ kann der dezidierte Chip in ein Gehäuse integriert sein, das in das Endgerät festeinlötbar bzw. festeingelötet ist. Ein einlötbares/eingelötetes Teilnehmeridentitätsmodul wird mit dem Zusatz "embedded" versehen und als eUICC bezeichnet, wobei e für embedded steht und die weitere Bezeichnung vom entsprechend ausgestatteten Plug-In übernommen ist. Weitere mögliche Formfaktoren eines Teilnehmeridentitätsmoduls sind integrierte Teilnehmeridentitätsmodule, die auf einem Endgeräte-Chip oder SoC (System-on-Chip) des Endgeräts mit integriert sind, also keinen eigenen Chip besitzen. Integrierte Teilnehmeridentitätsmodule werden mit dem Zusatz "integrated" versehen und z.B. als integrated UICC, iUICC. Weitere mögliche Formfaktoren eines Teilnehmeridentitätsmoduls sind reine Software-Module mit der Funktionalität eines Teilnehmeridentitätsmoduls, die in einen Endgeräte-Chip integriert sind.

### Stand der Technik

Die technische Spezifikation [1] [SGP.22] "GSMA SGP.22 RSP Technical Specification Version 2.2.2, 05 June 2020" ist mit der Fernverwaltung von Teilnehmeridentitätsmodulen, eUICCs, in mobilfunkfähigen Endgeräten aus dem Consumer-Bereich befasst. Gemäß [1] [SGP.22], Kapitel 3.2 "Local Profile Management", lässt sich der Status eines Profils, enabled (aktiviert) oder disabled (deaktiviert) mit, mittels eines Kommandos, das von einem Profilverwaltungsserver SM-DP+ über einen im Endgerät oder im eUICC gelegenen Local Profile Assistant, LPA, an das eUICC gesendet wird, ändern. Mittels des Kommandos Profile Enable lässt sich ein Profil in den Status enabled (aktiviert) versetzen. Mittels des Kommandos Profile Disable lässt sich ein Profil in den Status disabled (deaktiviert) versetzen. Gemäß Kapitel 2.9.1 "Profile Policy Rules" kann mittels Profile Policy Rules festgelegt werden, dass es zulässig oder nicht zulässig ist, Profile zu disablen (deaktivieren). Profile Policy Rules sind Teil der Profil-Metadaten, die wiederum Teil des Profils sind.

Dokument [2] [SGP.22 v3.0 Draft] GSMA RSP Technical Specification Version 3.0 Draft, das zum Anmeldezeitpunkt der Anmeldung unveröffentlicht ist und firmeninternen, nichtöffentlichen Stand der Technik bildet, sieht in Kapitel 3.7 zusätzlich ein Remote Profile Mangement und Remote eUICC Management vor, gemäß dem ein Profilverwaltungsserver SM-DP+ oder Managing DP+ (ein Managing DP+ ist ein dem SM-DP+ analoger Profilverwaltungsserver, der im Unterschied zu einem SM-DP+ unter Verwaltung eines Mobilfunk-Netzbetreibers MNO steht; ein SM-DP+ steht unter Verwaltung eines Profil-Lieferanten) Enable Profile Operationen (Kommandos) zum Enablen (Aktivieren) von Profilen, und Disable Profile Operationen (Kommandos) zum Disablen (Deaktivieren) von Profilen an eUICCs senden kann. Der Status eines Profils lässt sich also durch den Profilverwaltungsserver SM-DP+ (oder Managing DP+) aus der Ferne, per Remote Management, ändern. Weiter ist in Kapitel 3.8 ein Remote Management durch den Netzbetreiber (Operator) beschrieben. Gemäß Kapitel 3.7 ist vorgesehen dass ein Profilverwaltungsserver SM-DP+ (oder ggf ein Managing DP+) authorisiert sein muss, damit er den Status eines Profils in einem eUICC ändern darf, beispielsweise durch eine Enable Profile oder Disable Profile Operation.

Das Dokument [3] [SGP.31] "GSMA SGP.31 eSIM loT Architecture and Requirements Version 1.0, 19 April 2022" ist mit der Architektur und den Anforderungen von Teilnehmeridentitätsmodulen, eUICCs, im Bereich des Internet-of-Things, loT, befasst. Die Fernverwaltung eines loT eUICC erfolgt, je nach Art der Verwaltungstätigkeit, von einem Fernverwaltungsserver eSIM loT remote Manager, elM, aus, oder von einem Profilverwaltungsserver SM-DP+ oder Managing DP+ aus, der jeweils mit dem eUICC über einen im Endgerät oder im eUICC gelegenen loT Profile Assistant, IPA, kommuniziert. Profil Download, also das Herunterladen von Profilen in eUICCs, erfolgt durch den Profilverwaltungsserver SM-DP+. Das Profil-State-Management, also die Profil-Status-Verwaltung, insbesondere das Änderung des Profil-Status eines Profils durch eine remote gesendete Operation wie Enable Profile oder Disable Profile, erfolgt durch den Fernverwaltungsserver eSIM loT remote Manager, elM.

Operationen, durch die der Profil-Status eines Profils geändert wird, werden auch als Profile State Management Operations, PSMO, bezeichnet.

Im Bereich des Internet-of-Things (loT) kann es erforderlich sein, dass der Status eines Profils in einem eUICC eines mobilfunkfähigen IoT-Endgeräts durch einen vorab unbekannten Fernverwaltungsserver eSIM loT remote Manager eIM geändert wird. Das Szenario, dass ein vorab unbekannter Server Verwaltungsmaßnahmen an einem eUICC im IoT-Bereich durchführt, wird auch als Open Market loT bezeichnet. Eine Remote Verwaltung, oder Verwaltung aus der Ferne, eines in einem eUICC implementierten Profils durch einen vorab unbekannten Server ist in den bisherigen Spezifikationen nicht adressiert.

Gemäß Dokument [3] [SGP.31], Kapitel 6.2, Profile Enabling, und Kapitel 6.3, Profile Disabling, ist vorgesehen, dass für eine Profil-Status-Änderung mittels einer Operation Enable Profile oder Disable Profile ein seitens des eIM signierter Request an das eUICC gesendet wird. Somit hat nur ein vorab identifizierter Fernverwaltungsserver eSIM loT remote Manager, elM, der eine Signatur erstellt und an das eUICC sendet, die Möglichkeit, den Status eines Profils in einem eUICC zu ändern. Die in Dokument [3] [SGP.31] und den weiteren Spezifikationen vorgesehenen Lösungen sind somit unzureichend um die auch vorab unbekannten Servern die Möglichkeit einer Profil-Status-Änderung einzuräumen.

### Zusammenfassung der Erfindung

Der Erfindung liegt die Aufgabe zu Grunde, eine Möglichkeit für die Statusverwaltung von Profilen zu schaffen, die es vorab unbekannten Servern, insbesondere vorab unbekannten Fernverwaltungsserver eSIM loT remote Manager elM, erlaubt, den Status von Profilen in eUICCs in mobilfunkfähigen Endgeräten zu ändern.

Die Aufgabe wird gelöst durch ein Profil nach Anspruch 1. Vorteilhafte Ausgestaltungen der Erfindung sind in den abhängigen Ansprüchen angegeben.

Das erfindungsgemäße Profil nach Anspruch 1 ist zur Implementierung in ein Teilnehmeridentitätsmodul vorgesehen - dazu kann das Profil beispielsweise auf einem Server bereitgestellt sein -, oder alternativ bereits in ein Teilnehmeridentitätsmodul implementiert. Das Profil kann mindestens einen ersten und einen zweiten Profil-Status einnehmen. Das Profil umfasst Profil-Metadaten. Das Profil ist dadurch gekennzeichnet dass die Profil-Metadaten ein Profil-Status-Verwaltungs-Flag umfassen, das einen ersten und einen zweiten Flag-Status des Profil-Status-Verwaltungs-Flag einnehmen kann, wobei, wenn das Flag den ersten Flag-Status einnimmt, es beliebigen Verwaltungsservern erlaubt ist, den Profil-Status des Profils zu ändern.

Die erfindungsgemäße Flag-Lösung ermöglicht es, vorab unbekannten Verwaltungsservern zu erlauben Status-Änderungen an Profilen vorzunehmen, da hierbei der Verwaltungsserver nicht explizit benannt zu werden braucht.

Insbesondere wenn das Profil in ein eUICC implementiert ist, das in einem loT Endgerät betrieben wird, schafft die erfindungsgemäße Flag-Lösung die Möglichkeit, dass - bei einem entsprechenden Flag-Status des Profil-Status-Verwaltungs-Flag - ein vorab unbekannter Fernverwaltungsserver eSIM loT remote Manager eIM den Status des Profils ändert, ohne dass sich der eSIM loT remote Manager eIM vorab zwingend identifizieren oder authentisieren muss.

Daher ist gemäß Anspruch 1 ein Profil geschaffen, bei dem eine Möglichkeit für die Statusverwaltung des Profils geschaffen ist, die es vorab unbekannten Servern, insbesondere vorab unbekannten Fernverwaltungsserver eSIM loT remote Manager elM, erlaubt, den Status des Profilen zu ändern.

Gemäß der Erfindung werden weiter ein Teilnehmeridentitätsmodul, eUICC, vorgesehen, in dem ein Profil oder mehrere Profile vorgesehen ist oder sind, die ein erfindungsgemäßes Profil-Status-Verwaltungs-Flag umfassen.

Gemäß der Erfindung ist weiter ein Server vorgesehen, insbesondere ein Profilverwaltungsserver wie beispielsweise ein GSMA SM-DP+ Server, mit einem oder mehreren auf dem Server gespeicherten Profilen, die ein erfindungsgemäßes Profil-Status-Verwaltungs-Flag umfassen. Die Profile sind auf dem Server vorzugsweise zum Profil-Download in Teilnehmeridentitätsmodule bereitgestellt.

Wahlweise ist als erster und zweiter Flag-Status des Profil-Status-Verwaltungs-Flag der Status gesetzt und nicht gesetzt vorgesehen ist. Der Flag-Status gesetzt und nicht gesetzt können beispielsweise, bei einem Flag, das nur ein Bit umfasst, durch die Werte Null und Eins eines Bit realisiert sein, in beliebiger Zuordnung von gesetzt/nicht gesetzt zu Null/Eins. Gemäß alternativen Ausführungsformen kann ein Flag vorgesehen sein, dass mehr als ein Bit umfasst.

Wahlweise ist als erster und zweiter Profil-Status der Status enabled und disabled gemäß GSMA vorgesehen. Weiter Möglichkeiten eines Profil-Status sind weiter unten angegeben.

Wahlweise umfassen die Profil-Metadaten eine Mehrzahl von Profil-Metadaten-Einträgen, wobei jeder Profil-Metadaten-Eintrag durch einen Datentyp gekennzeichnet ist, und wobei das Profil-Status-Verwaltungs-Flag als ein Profil-Metadaten-Eintrag gestaltet ist und durch einen Datentyp Profile-State-Management-Operation, PSMO, Konfiguration gekennzeichnet ist. Ein Datentyp PSMO Konfiguration (PSMO Configuration) ist in aktuellen GSMA Spezifikationen nicht vorgesehen, ist aber zur Implementierung des erfindungsgemäßen Profil-Status-Verwaltungs-Flag nützlich. Daher ist es vorteilhaft, in Programmcode-Definitionen im Zusammenhang mit der Erfindung auch den neuen Datentyp mit zu definieren.

Gemäß bevorzugten Ausführungsformen der Erfindung ist das erfindungsgemäße Profil-Status-Verwaltungs-Flag in einem Internet-of-Things, loT, Umfeld gemäß GSMA [3] [SGP.31] vorgesehen. In diesem Fall ist es, wenn das Flag den ersten Flag-Status einnimmt, insbesondere beliebigen GSMA Fernverwaltungsservern eSIM loT remote Manager, elM, erlaubt, den Profil-Status des Profils zu ändern.

Gemäß manchen Ausführungsformen des Profils ist ein generisches Profil-Status-Verwaltungs-Flag vorgesehen, dass generell Profil-Status-Operationen, entsprechend dem Flag-Status, erlaubt oder nicht erlaubt.

Gemäß manchen Ausführungsformen adressiert das Profil-Status-Verwaltungs-Flag eine oder mehrere spezielle Funktionen zur Status-Verwaltung und umfasst eines oder mehrere der folgenden Flag-Segmente:
- Flag-Segment enable(0), um in Abhängigkeit vom Flag-Status des Flag-Segments ein Enablen, Aktivieren, des Profils zu erlauben oder nicht zu erlauben;
- Flag-Segment disable(1), um in Abhängigkeit vom Flag-Status des Flag-Segments ein Disablen, Deaktivieren, des Profils zu erlauben oder nicht zu erlauben;
- Flag-Segment delete(2), um in Abhängigkeit vom Flag-Status des Flag-Segments ein Löschen des Profils zu erlauben oder nicht zu erlauben;
- Flag-Segment listProfileInfo(3), um in Abhängigkeit vom Flag-Status des Flag-Segments ein Ausgeben von Profil-Information über das Profils zu erlauben oder nicht zu erlauben;
- Flag-Segment contactPcmp(4), um in Abhängigkeit vom Flag-Status des Flag-Segments eine Kommunikation zu einer Profilinhalte-Verwaltungsplattform oder in GSMA Fachbegriff "Profile Content Management Platform", PCMP, zu erlauben oder nicht zu erlauben;
- Flag-Segment updateMetadata(5), um in Abhängigkeit vom Flag-Status des Flag-Segments ein Aktualisieren der Profil-Metadaten des Profils zu erlauben oder nicht zu erlauben.

Bei den hier angegebenen Ausführungsformen kann jedes der Flag-Segmente jeweils einen ersten Flag-Status und einen zweiten Flag-Status des Flag-Segments des Profil-Status-Verwaltungs-Flag einnehmen.

Als Profilinhalte-Verwaltungsplattform oder in GSMA Fachbegriff "Profile Content Management Platform", PCMP, kann wahlweise ein OTA-Server (OTA = Over-The-Air, in etwa über-die-Luft) vorgesehen sein, von dem aus über eine Funkschnittstelle (daher OTA) Daten, Profile, Operationen, Kommandos und dergleichen an ein Teilnehmeridentitätsmodul gesendet werden können, und Antworten des Teilnehmeridentitätsmoduls an den OTA-Server / PCMP empfangen werden können.

Wahlweise ist durch das erfindungsgemäße Profil-Status-Verwaltungs-Flag die herkömmliche Lösung in den Profil-Metadaten einen (oder mehrere) zugelassene Server einzutragen, z.B. SM-DP+ oder elM, der/die zur Durchführung von Profil-Verwaltungs-Operation berechtigt ist/sind, ersetzt.

Wahlweise, alternativ ist/sind zusätzlich zum erfindungsgemäßen Profil-Status-Verwaltungs-Flag in den Profil Metadaten ein oder mehrere zugelassene Server eingetragen, z.B. SM-DP+ oder elM, der/die zur Durchführung von Profil-Verwaltungs-Operation berechtigt ist/sind.

Ein erfindungsgemäßes Verfahren zur Statusänderung eines Profils, das in ein Teilnehmeridentitätsmodul implementiert ist und ein erfindungsgemäßes Profil-Status-Verwaltungs-Flag umfasst, umfasst die im Teilnehmeridentitätsmodul durchgeführten Schritte:
- Empfangen, von einem Server (optional über einen Profile Assistant wie den IPA gemäß [3] oder LPA gemäß [1], [2], der jeweils auch im Endgerät liegen kann), einer Profil-Status-Operation, die darauf abzielt einen Profil-Status des Profils von einem ersten Profil-Status zu einem zweiten Profil-Status zu ändern;
- Ermitteln des Flag-Status des Profil-Status-Verwaltungs-Flag;
- in Abhängigkeit vom ermittelten Flag-Status, Ändern des Profil-Status gemäß der Status-Operation, oder Ablehnen der Ausführung der Profil-Status-Operation.

Wahlweise ist als Status-Operation eine Enable Profile Operation, zum Enablen (Aktivieren) des Profils, oder eine Disable Profile Operation zum Disablen (Deaktivieren) des Profils, vorgesehen. Wahlweise ist als Status-Operation eine oder mehrere der folgenden Status-Operationen vorgesehen: eine Delete Profile Operation, um das Profil zu löschen; eine List Profile Info Operation, um Informationen über das Profil abzufragen und aufzulisten; eine Contact PCMP Operation, um Kommunikation zu einer Profilinhalte-Verwaltungsplattform ("Profile Content Management Platform"), PCMP, herzustellen; eine Update Metadata Operation, um die Profil-Metadaten zu aktualisieren, d.h. zu ändern.

Gemäß manchen Ausführungsformen der Erfindung ist als Server ein GSMA Fernverwaltungsserver eSIM loT remote Manager, eIM, vorgesehen, z.B. wie in [3] [SGP.31] beschrieben.

Wahlweise wird die Profil-Status-Operation in einem Profil-Status-Management Package, PSMO Package, im Teilnehmeridentitätsmodul empfangen, und das Teilnehmeridentitätsmodul extrahiert die Profil-Status-Operation aus dem PSMO Package, und führt die Profil-Status-Operation anschließend aus.

Als Operation im oben beschriebenen Zusammenhang kann wahlweise ein Kommando vorgesehen sein, und weiter wahlweise ein einzelnes Kommando oder alternativ auch eine Folge von mehreren Kommandos.

Die vorgeschlagene Lösung ist insbesondere anwendbar für das Dokument [4] [SGP.32] GSMA SGP.32 eSIM loT Technical Specification (zum Anmeldezeitpunkt der Anmeldung unveröffentlicht), zu dem die Anmelderin Beiträge liefert.

### Kurze Beschreibung der Zeichnungen

Im Folgenden wird die Erfindung an Hand von Ausführungsbeispielen und unter Bezugnahme auf die Zeichnung näher erläutert, in der zeigen:
- Fig. 1: eine schematische Darstellung des Empfangs eines PSMO Package mit einer PSMO Operation, Profile Enable, durch ein Teilnehmeridentitätsmodul eUICC von einem Fernverwaltungsserver eSIM loT remote Manager, eIM, gemäß einer Ausführungsform der Erfindung;
- Fig. 2: eine auszugsweise schematische Darstellung von Profil-Metadaten, gemäß einer Ausführungsform der Erfindung;
- Fig. 3: Figur 1 aus dem Dokument [3] [SGP.31], mit Zusatzbeschriftungen.

### Detaillierte Beschreibung von Ausführungsbeispielen

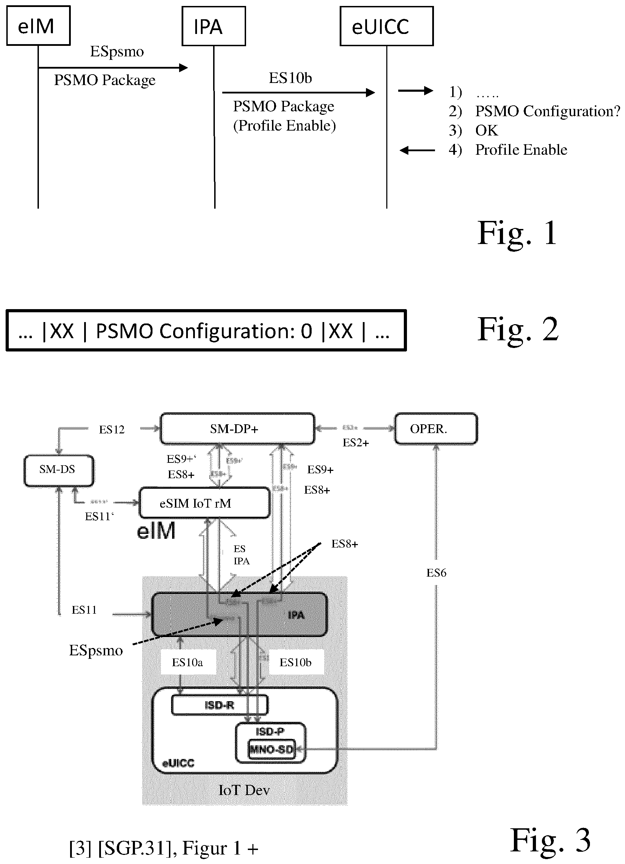

Fig. 1 zeigt eine schematische Darstellung des Empfangs eines PSMO Package mit einer PSMO Operation, Profile Enable, durch ein Teilnehmeridentitätsmodul eUICC von einem Fernverwaltungsserver eSIM loT remote Manager, eIM, gemäß einer Ausführungsform der Erfindung. Das Teilnehmeridentitätsmodul eUICC wird in einem Endgerät betrieben, in dem ein loT Profile Assistant IPA enthalten ist. In dem Teilnehmeridentitätsmodul eUICC ist (mindestens) ein Profil enthalten. Der Fernverwaltungsserver eSIM loT remote Manager, eIM, sendet über den Kanal ESpsmo ein PSMO Package an den ein loT Profile Assistant IPA. In dem PSMO Package ist eine Profile Enable Operation für das in dem Teilnehmeridentitätsmodul eUICC enthaltene Profil enthalten. Der loT Profile Assistant IPA sendet das PSMO Package über den Kanal ES10b an das Teilnehmeridentitätsmodul eUICC weiter.

Fig. 2 eine auszugsweise schematische Darstellung von Profil-Metadaten eines beispielhaften Profils, gemäß einer Ausführungsform der Erfindung. Gemäß der Erfindung, gemäß einer Ausführungsform, enthalten die Profil-Metadaten ein zusätzliches Datenfeld für die Profile-State-Managment-Operation- Konfiguration, PSMO-Konfiguration (oder PSMO-Configuration). In der PSMO-Konfiguration ist ein Profil-Status-Verwaltungs-Flag vorgesehen, das den Wert Null (0) oder Eins (1) haben kann. Je nach Wert des Profil-Status-Verwaltungs-Flag, 0 oder 1, ist es beliebigen GSMA Fernverwaltungsserver eSIM loT remote Manager, eIM, bedingungslos erlaubt, oder nicht ohne Weiteres erlaubt, den Status des Profils zu ändern. Wahlweise kann 0 oder 1 der Wert sein, bei dem die Profil-Status-Änderung bedingungslos zulässig ist. Bei einem Wert des Profil-Status-Verwaltungs-Flag, der eine Änderung des Profil-Status nicht (ohne Weiteres) erlaubt, kann wahlweise ergänzend ein weiterer Eintrag in den Profil-Metadaten geprüft werden. Beispielsweise hat ein in den Profil-Metadaten ausdrücklich eingetragener Fernverwaltungsserver eSIM loT remote Manager, eIM, unabhängig vom Wert des Profil-Status-Verwaltungs-Flag stets die Erlaubnis den Profil-Status des Profils zu ändern. Alternativ enthalten die Profil-Metadaten keinen ausdrücklich eingetragenen Fernverwaltungsserver eSIM loT remote Manager, eIM, der unabhängig vom Wert des Profil-Status-Verwaltungs-Flag stets die Erlaubnis hat den Profil-Status des Profils zu ändern.

Nachfolgend wird eine beispielhafte Routine zur Implementierung eines Profil-Status-Verwaltungs-Flag gezeigt.

```
 -------
 --ASN1START
 PsmoConfiguration ::= SEQUENCE { -- #SupportedForPsmoV1.0#
       PsmoSupportedFlag BOOLEAN, -- indiziert ob das Profil PSMO Operationen
 erlaubt
 }
 PsmoType ::= BIT STRING{
       enable(0), disable(1), delete(2), listProfileInfo(3), contactPcmp(4),
 updateMetadata(5)
 }
 -- ASN1STOP
 -------
```

Fig. 3 zeigt Figur 1 aus dem Dokument [3] [SGP.31], mit Zusatzbeschriftungen, insbesondere um die Lesbarkeit zu verbessern. Fig. 3 zeigt einen Profilverwaltungsserver SM-DP+, einen Fernverwaltungsserver eSIM loT remote Manager, eIM, einen loT Profile Assistant IPA, ein Endgerät loT Dev und ein Teilnehmeridentitätsmodul eUlCC.

In eine Teilnehmeridentitätsmodul eUICC im IoT-Umfeld, beispielsweise gemäß Fig. 3 und Dokument [3] [SGP.31], kann eine Profil-Status-Operation beispielsweise vom Fernverwaltungsserver eSIM IoT remote Manager, eIM, über dem ESpmo an den im Endgerät oder im eUICC gelegenen loT Profile Assistant IPA gesendet werden, und vom loT Profile Assistant IPA über den Kommunikationskanal ES10b weiter an das Teilnehmeridentitätsmodul eUICC gesendet werden.

### Zitierte Dokumente

[1] [SGP.22] GSMA SGP.22 RSP Technical Specification Version 2.2.2, 05 June 2020
[2] [SGP.22 v3.0 Draft] GSMA RSP Technical Specification Version 3.0 Draft (zum Anmeldezeitpunkt der Anmeldung unveröffentlicht)
[3] [SGP.31] GSMA SGP.31 eSIM loT Architecture and Requirements Version 1.0, 19 April 2022
[4] [SGP.32] GSMA SGP.32 eSIM loT Technical Specification (zum Anmeldezeitpunkt der Anmeldung unveröffentlicht)

## Patentansprüche

1. Profil zur Implementierung in ein oder implementiert in ein Teilnehmeridentitätsmodul (eUICC), wobei das Profil mindestens einen ersten und einen zweiten Profil-Status einnehmen kann, das Profil umfassend Profil-Metadaten, **dadurch gekennzeichnet dass** die Profil-Metadaten ein Profil-Status-Verwaltungs-Flag umfassen, das einen ersten und einen zweiten Flag-Status des Profil-Status-Verwaltungs-Flag einnehmen kann, wobei, wenn das Flag den ersten Flag-Status einnimmt, es beliebigen Verwaltungsservern erlaubt ist, den Profil-Status des Profils zu ändern.

2. Profil nach Anspruch 1, wobei als erster und zweiter Flag-Status der Status gesetzt und nicht gesetzt vorgesehen ist.

3. Profil nach Anspruch 1 oder 2, wobei als erster und zweiter Profil-Status der Status enabled und disabled gemäß GSMA vorgesehen ist.

4. Profil nach einem der Ansprüche 1 bis 3, wobei die Profil-Metadaten eine Mehrzahl von Profil-Metadaten-Einträgen umfassen, wobei jeder Profil-Metadaten-Eintrag durch einen Datentyp gekennzeichnet ist, und wobei das Profil-Status-Verwaltungs-Flag als ein Profil-Metadaten-Eintrag gestaltet ist und durch einen Datentyp Profile-State-Management-Operation, PSMO, Konfiguration gekennzeichnet ist.

5. Profil nach einem der Ansprüche 1 bis 4, wobei, wenn das Flag den ersten Flag-Status einnimmt, es beliebigen GSMA Fernverwaltungsservern eSIM loT remote Manager, eIM, erlaubt ist, den Profil-Status des Profils zu ändern.

6. Profil nach einem der Ansprüche 1 bis 5, wobei das Profil-Status-Verwaltungs-Flag ein oder mehrere der folgenden Flag-Segmente umfasst, das jeweils einen ersten und einen zweiten Flag-Status des Flag-Segments des Profil-Status-Verwaltungs-Flag einnehmen kann:
- Flag-Segment enable(0), um in Abhängigkeit vom Flag-Status des Flag-Segments ein Enablen, Aktivieren, des Profils zu erlauben oder nicht zu erlauben;
- Flag-Segment disable(1), um in Abhängigkeit vom Flag-Status des Flag-Segments ein Disablen, Deaktivieren, des Profils zu erlauben oder nicht zu erlauben;
- Flag-Segment delete(2), um in Abhängigkeit vom Flag-Status des Flag-Segments ein Löschen des Profils zu erlauben oder nicht zu erlauben;
- Flag-Segment listProfileInfo(3), um in Abhängigkeit vom Flag-Status des Flag-Segments ein Ausgeben von Profil-Information über das Profils zu erlauben oder nicht zu erlauben;
- Flag-Segment contactPcmp(4), um in Abhängigkeit vom Flag-Status des Flag-Segments eine Kommunikation zu einer Profilinhalte-Verwaltungsplattform, PCMP, zu erlauben oder nicht zu erlauben;
- Flag-Segment updateMetadata(5), um in Abhängigkeit vom Flag-Status des Flag-Segments ein Aktualisieren der Profil-Metadaten des Profils zu erlauben oder nicht zu erlauben.

7. Teilnehmeridentitätsmodul (eUICC) mit einem Profil oder mehreren Profilen nach einem der vorhergehenden Ansprüche 1 bis 6.

8. Server (SM-DP+) mit einem Profil oder mehreren Profilen nach einem der vorhergehenden Ansprüche 1 bis 6.

9. Verfahren zur Statusänderung eines Profils, das in ein Teilnehmeridentitätsmodul (eUICC) nach Anspruch 7 implementiert ist, umfassend die im Teilnehmeridentitätsmodul (eUICC) durchgeführten Schritte:
- Empfangen, von einem Server (eIM), einer Profil-Status-Operation, die darauf abzielt einen Profil-Status des Profils von einem ersten Profil-Status zu einem zweiten Profil-Status zu ändern;
- Ermitteln des Flag-Status des Profil-Status-Verwaltungs-Flag;
- in Abhängigkeit vom ermittelten Flag-Status, Ändern des Profil-Status gemäß der Status-Operation, oder Ablehnen der Ausführung der Profil-Status-Operation.

10. Verfahren nach Anspruch 9, wobei als Status-Operation eine Enable Profile Operation oder eine Disable Profile Operation vorgesehen ist.

11. Verfahren nach Anspruch 9 oder 10, wobei als Server ein GSMA Fernverwaltungsserver eSIM loT remote Manager, eIM, vorgesehen ist.

12. Verfahren nach einem der Ansprüche 9 bis 11, wobei die Profil-Status-Operation in einem Profil-Status-Management Package, PSMO Package, im Teilnehmeridentitätsmodul (eUICC) empfangen wird, und das Teilnehmeridentitätsmodul (eUICC) die Profil-Status-Operation aus dem PSMO Package extrahiert.
